# EUROPEAN PATENT APPLICATION

(11) **EP 4 681 908 A1**
(43) Date of publication of application: **21.01.2026**
(21) Application number: 24896142.7
(22) Date of filing: 29.10.2024
(51) Int. Cl.: B29C 64/386, B33Y 50/00, B29L 22/00

(54) **INTERNALLY-PRESSURIZED CAVITY STRUCTURE OF SPORTS GEAR, AND MANUFACTURING METHOD THEREFOR**

(30) Priority: 27.11.2023 CN 202311597102
(71) Applicant: Guangdong Jingyun Intelligent Technology Co., Ltd., Dongguan, Guangdong 523808 (CN)
(72) Inventor: ZHAO, Qing, Dongguan, Guangdong 523808 (CN); CHENG, Jianxiang, Dongguan, Guangdong 523808 (CN)
(74) Representative: KIPA AB
(86) International application number: PCT/CN2024/128221
(87) International publication number: WO 2025/113051

(57) **Abstract**

The present disclosure provides a sports equipment cavity structure with internal pressure and a manufacturing method thereof, including steps of: obtaining mechanical data of the sports equipment cavity structure with internal pressure; generating cavity distribution data, cavity structure data and cavity air pressure data according to the mechanical data; determining a cavity structure model according to the cavity distribution data, the cavity structure data and the cavity internal pressure data; and importing the cavity structure model into a 3D printer to print and generate the sports equipment cavity structure with internal pressure. The present disclosure utilizes mechanical data to determine a specific cavity structure required for different regions, thereby defining an actual printing model. The model is then printed to form a sports equipment cavity structure that provides corresponding structural designs for respective functional regions, thereby satisfying the user's demand for personalized customization.

## Description

### FIELD

The present disclosure relates to the technical field of design and manufacturing of sports equipment, and in particular to a sports equipment cavity structure with internal pressure and a manufacturing method thereof.

### BACKGROUND

Conventional sports equipment, such as shoes and knee pads, generally employ foamed materials as cushioning materials. These materials are lightweight and provide good softness and energy absorption. However, such materials typically exhibit only average rebound performance and poor durability. With prolonged use, such materials gradually undergo fatigue and failure, leading to significant degradation in comfort and athletic performance, and failing to meet the requirements of sports equipment for rapid rebound. To improve rebound performance, the prior art generally adopts airbag-type cavity structures to enhance the rebound performances of sports equipment such as airbag insoles or airbag backpack straps. However, the current molding methods mainly rely on mold stamping to form desired cavity structures. Cavity structures fabricated by such methods are limited to uniform airbag shapes constrained by the original molds, which prevents personalized customization and fails to provide structural designs tailored to different functional regions of sports equipment. Moreover, the cavity structures in the prior art are not pressurized. As a result, the cavity structures also suffer from poor durability and tend to fail after long-term use. Accordingly, the prior art cannot simultaneously achieve both improved support effect and rebound performance while also enhancing product durability.

Therefore, the prior art still needs to be improved and developed.

### SUMMARY

In view of the above-mentioned deficiencies in the prior art, an object of the present disclosure is to provide a sports equipment cavity structure with internal pressure and a manufacturing method thereof, so as to solve the problem that the sports equipment cavity structure fabricated in the prior art is difficult to achieve both support effect and rebound performance, while also enhancing product durability.

The technical solution of the present disclosure is as follows:
A first aspect of the present disclosure provides a manufacturing method for a sports equipment cavity structure with internal pressure, which includes the steps of:
Obtaining mechanical data of the sports equipment cavity structure with internal pressure;
Generating cavity distribution data, cavity structure data and cavity air pressure data according to the mechanical data;
Determining a cavity structure model according to the cavity distribution data and the cavity structure data; and
Importing the cavity structure model into a 3D printer to print and generate the sports equipment cavity structure with internal pressure.

In one embodiment, the step of obtaining mechanical data of the sports equipment cavity structure with internal pressure includes:
Generating a three-dimensional model of the sports equipment cavity structure with internal pressure according to a user body part corresponding to the sports equipment cavity structure with internal pressure;
Detecting, by a mechanical sensor, force data of the user body part; and
Generating the mechanical data on the three-dimensional model according to the force data.

In one embodiment, the step of generating cavity distribution data, cavity structure data and cavity air pressure data according to the mechanical data includes:
Obtaining rebound force data and support force data from the mechanical data;
Obtaining a support region and an rebound region on the sports equipment cavity structure with internal pressure according to the rebound force data and the support force data;
Generating the cavity distribution data according to the support region and the rebound region;
Generating the cavity structure data and the cavity air pressure data according to the rebound force data and the support force data.

In one embodiment, the cavity distribution data includes:
Cavity connection relationship, the cavity connection relationship illustrates a connection relationship between adjacent cavities;
Regional cavity density, the regional cavity density illustrates a quantity of cavities per unit area in a same horizontal plane; and
Layer count, the layer count illustrate a quantity of cavities in a vertical direction.

In one embodiment, the cavity structure data includes:
Cavity shape, the cavity shape illustrates a shape of a cell cavity;
Cavity size, the cavity size illustrates a length of the cell cavity in each direction of three-dimensional space; and
Cavity wall thickness, the cavity wall thickness illustrates a side wall thickness of the cell cavity.

In one embodiment, the cavity shape includes an ellipsoid, a sphere, a cuboid, a cube and an octahedron.

In one embodiment, the cavity air pressure data includes cavity internal pressure, the cavity internal pressure refers to an air pressure value in the cell cavity, and the cavity internal pressure is greater than 1 atm.

In one embodiment, the step of importing the cavity structure model into a 3D printer in a pressurized environment or a 3D printer with an internal pressure increasing module to print and generate the sports equipment cavity structure with internal pressure includes steps of:
Importing the cavity structure model into a 3D printer to determine an initial printing position;
Printing a cell cavity with an air chamber at the initial printing position; and
Repeating the printing process of the cell cavity according to the cavity structure model to generate the sports equipment cavity structure with internal pressure.

In one embodiment, before the step of importing the cavity structure model into a 3D printer to print and generate the sports equipment cavity structure with internal pressure, the method further includes:
Selecting, according to the cavity structure model, a resin material for 3D printing.

A second aspect of the present disclosure provides a sports equipment cavity structure with internal pressure, which is prepared by the manufacturing method for sports equipment cavity structure with internal pressure as described in any one of the above items.

In summary, the present disclosure provides a sports equipment cavity structure with internal pressure and a manufacturing method and application thereof, including steps of: obtaining mechanical data of the sports equipment cavity structure with internal pressure; generating cavity distribution data, cavity structure data and cavity air pressure data according to the mechanical data; determining a cavity structure model according to the cavity distribution data, the cavity structure data and the cavity internal pressure data; and importing the cavity structure model into a 3D printer in a pressurized environment or a 3D printer with an internal pressure increasing module, to print and generate the sports equipment cavity structure with internal pressure. The present disclosure utilizes mechanical data to determine a specific cavity structure required for different regions, thereby defining an actual printing model. The model is then printed to form a sports equipment cavity structure that provides corresponding structural designs for respective functional regions, thereby satisfying the user's demand for personalized customization.

### BRIEF DESCRIPTION OF THE DRAWINGS

FIG. 1 is a flow chart of a manufacturing method for a sports equipment cavity structure with internal pressure according to the present disclosure.
FIG. 2 is a flow chart of step S100 in the manufacturing method for a sports equipment cavity structure with internal pressure according to the present disclosure.
FIG. 3 is a flow chart of step S200 in the manufacturing method for a sports equipment cavity structure with internal pressure according to the present disclosure.
FIG. 4 is a flow chart of step S400 in the manufacturing method for a sports equipment cavity structure with internal pressure according to the present disclosure.
FIG. 5 is a schematic diagram of a three-dimensional model of a sports equipment cavity structure with internal pressure as a sole cushioning material according to the present disclosure.
FIG. 6 is a schematic diagram of an ellipsoidal cell cavity in a sports equipment cavity structure with internal pressure according to the present disclosure.
FIG. 7 illustrates a 3×3×3 ellipsoidal array in a sports equipment cavity structure with internal pressure according to the present disclosure.
FIG. 8 illustrates a regular ellipsoidal array in a sports equipment cavity structure with internal pressure according to the present disclosure.
FIG. 9 is a schematic diagram of a 3D printer in the manufacturing method for a sports equipment cavity structure with internal pressure according to the present disclosure.

### DETAILED DESCRIPTION OF THE EMBODIMENTS

The present disclosure provides a sports equipment cavity structure with internal pressure and a manufacturing method thereof. To make the purpose, technical solution and effect of the present disclosure clearer and more specific, the present disclosure is further described in detail below. It should be understood that the embodiments described herein are only used to explain the present disclosure and are not used to limit the present disclosure.

3D printing technology, as an emerging model manufacturing technology, has gradually been applied in the production of sports equipment. By inputting desired structure of the sports equipment into a 3D printing software, the sports equipment can be manufactured through layer-by-layer printing. This eliminates the reliance on molds, thereby enabling personalized customization of sports equipment and providing different structural designs for different functional regions of the sports equipment.

The present disclosure combines 3D printing technology with the design of sports equipment cavity structure to obtain a cavity structure with internal pressure that exhibits excellent rebound performance. The present disclosure further allows the detailed design of the cavity structure to be customized according to the requirements of individual users, and provides different structural designs for different functional regions, thereby meeting refined user needs and broadening market applications. The present disclosure first obtains mechanical data of the required sports equipment cavity structure with internal pressure. Based on the mechanical data, cavity distribution data, cavity structure data, and cavity air pressure data are generated. A cavity structure model is then determined from the cavity distribution data, the cavity structure data, and the cavity air pressure data. The cavity structure model is subsequently imported into a 3D printer to print and generate the sports equipment cavity structure with internal pressure. Further, the cavity structure model is imported into a 3D printer operating in a pressurized environment, or into a 3D printer equipped with an internal pressure increasing module, so as to ensure the internal pressure of the cavity structure. By utilizing the feedback of different mechanical data, different functional regions can be specifically defined in the cavity structure model of the sports equipment cavity structure with internal pressure, thereby enabling different structural designs and different internal cavity pressures to be provided for different regions, thus achieving personalized customization requirements of users.

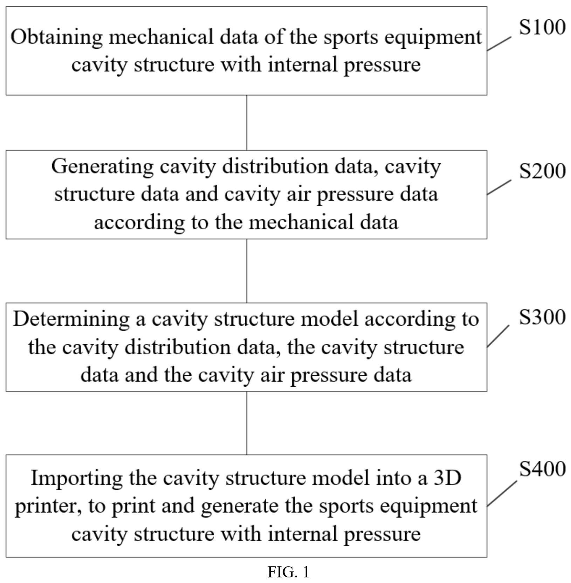

As shown in FIG. 1, the manufacturing method for the sports equipment cavity structure with internal pressure according to the present disclosure includes the following steps:
S100, obtaining mechanical data of the sports equipment cavity structure with internal pressure.

For different types of sports, different parts of the body, and users in different physical conditions, the support or elasticity that sports equipment needs to provide in different regions varies. Therefore, it is necessary to collect the mechanical data of the sports equipment cavity structure in advance in order to design a targeted three-dimensional model structure, thereby providing users with personalized customized designs to help different users protect their bodies during exercise.

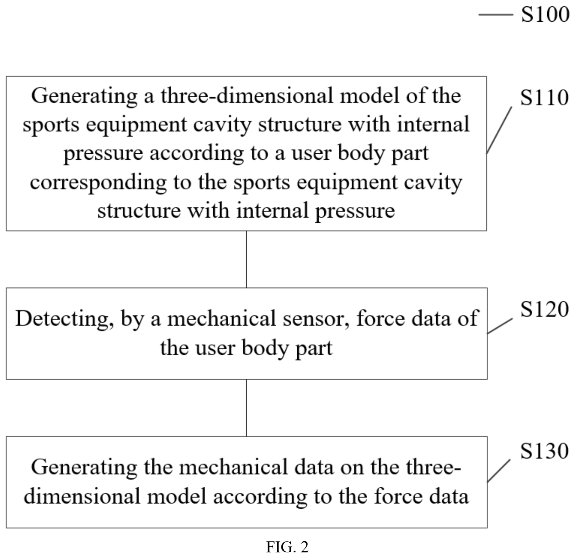

In one embodiment, as shown in FIG. 2, the step S100 includes:
S110, generating a three-dimensional model of the sports equipment cavity structure with internal pressure according to a user body part corresponding to the sports equipment cavity structure with internal pressure.

During implementation, the three-dimensional model of the sports equipment cavity structure with internal pressure is a model that reflects an overall outline and shape of the sports equipment cavity structure with internal pressure, so as to correspond to different body parts. Optionally, while the sports equipment cavity structure with internal pressure corresponds to a user's feet as a sole cushioning material, a three-dimensional model structure in a shape of insole is generated; while the sports equipment cavity structure with internal pressure corresponds to a user's shoulder as a strap cushioning material, a three-dimensional model structure in a shape of cuboid is generated; while the sports equipment cavity structure with internal pressure corresponds to a user's head as a helmet cushioning material, a ring-shaped three-dimensional model structure is generated. Constructing a corresponding three-dimensional model for specific sports equipment can ensure the differentiated design of the sports equipment cavity structure with internal pressure, give priority to meeting the rebound performance and support effect required by the corresponding sports equipment, and provide customized services for users.

In one embodiment, as shown in FIG. 2, after the step S110, the step S100 further includes:
S120, detecting, by a mechanical sensor, force data of the user body part;
S130, generating the mechanical data on the three-dimensional model according to the force data.

During implementation, the body part corresponding to the sports equipment are first determined, such as the sole cushioning material corresponds to the sole of foot, the strap cushioning material corresponds to the shoulder, the helmet cushioning material corresponds to the head, etc., and then mechanical sensors are installed on the corresponding body part to analyze the force data of the body part at different times during exercise, the force data includes loading position, loading direction and loading magnitude, etc., and then a force magnitude of the sports equipment corresponding to different body parts is obtained based on the principle of force interaction, thereby generating mechanical data of different regions on the three-dimensional model of the sports equipment cavity structure with internal pressure.

Further, as shown in FIG. 1, the manufacturing method for the sports equipment cavity structure with internal pressure according to the present disclosure further includes the steps of:
S200, generating cavity distribution data, cavity structure data and cavity air pressure data according to the mechanical data.

In sports equipment, depending on the type of sports equipment and the intended application scenarios, different regions of the sports equipment require different cushioning effects. Taking the cushioning material of a shoe sole as an example, during running and jumping, the regions corresponding to the forefoot and heel should, in addition to providing landing cushioning, primarily offer rebound force to the user, i.e., shortening the rebound time of the cavity structure so as to assist in generating propulsion for running and jumping. By contrast, the regions corresponding to the toes and the arch of the foot should, in addition to providing landing cushioning, primarily offer support force, i.e., reducing the displacement of the cavity structure during compression so as to alleviate the burden on the foot muscles. Accordingly, for sports equipment cavity structures corresponding to different sports or different body parts, different regions must be designed to provide either rebound force or support force. Based on the loading position, loading direction, and loading magnitude of the cavity structure relative to the human body during use, the regions of the cavity structure that are configured to provide rebound force and those that are configured to provide support force can be determined. In this way, during the manufacturing process, different regions can be allocated to provide different functionalities, thereby achieving personalized customization.

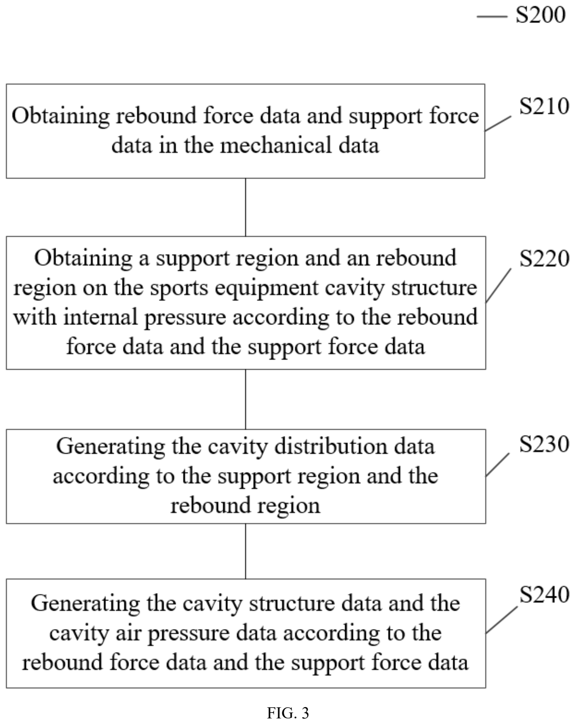

In one embodiment, as shown in FIG. 3, the step S200 includes:
S210, obtaining rebound force data and support force data in the mechanical data;
S220, obtaining a support region and an rebound region on the sports equipment cavity structure with internal pressure according to the rebound force data and the support force data;
S230, generating the cavity distribution data according to the support region and the rebound region;
S240, generating the cavity structure data and the cavity air pressure data according to the rebound force data and the support force data.

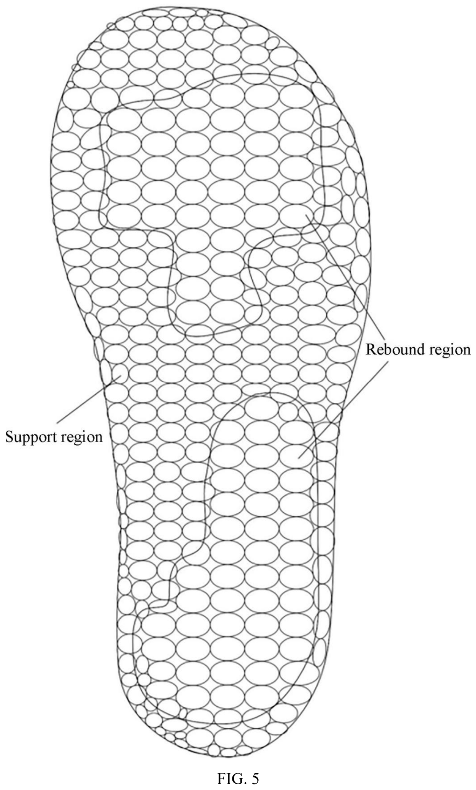

The rebound force data includes rebound speed, compression stroke and force change of the sports equipment cavity structure with internal pressure while moving; and the support force data includes support force and compression stroke provided by the sports equipment cavity structure with internal pressure while in a static state. According to the rebound force data and the support force data, the effect that each region of the sports equipment cavity structure with internal pressure needs to provide during use can be obtained, so as to determine where are rebound regions that provide greater rebound force and where are support regions that provide greater support force. As shown in Fig. 5, taking the cushioning material of a shoe sole as an example, an rebound region that primarily provides rebound force is formed in the forefoot and heel areas, while a support region that primarily provides support force is formed in the toe and arch areas. Optionally, a wall thickness may be reduced to enlarge an air chamber in the rebound region, whereas the air chamber may be reduced by increasing the wall thickness in the support region, thereby allocating different rebound regions and support regions within the sports equipment cavity structure with internal pressure. Furthermore, by adjusting the pressure inside the cavity, the corresponding regions can be tuned to provide greater rebound force or greater support force while maintaining durability.

During implementation, the cavity distribution data on the sports equipment cavity structure with internal pressure is obtained according to the different support regions and rebound regions allocated on the sports equipment cavity structure with internal pressure; the cavity structure data and cavity air pressure data on the sports equipment cavity structure with internal pressure are obtained according to the rebound force data and the support force data on different regions on the sports equipment cavity structure with internal pressure.

During implementation, the cavity distribution data includes cavity connection relationship, regional cavity density and layer count. The 3D printer prints layer by layer, and the layer count is the number of cavities in the vertical direction of the sports equipment cavity structure with internal pressure, that is, the number of printed layers. The regional cavity density is the number of cavities per unit area in the same horizontal plane, that is, in the same layer. The cavity connection relationship is the connection relationship between adjacent cavities, including horizontally adjacent and vertically adjacent cavities, and the air chambers of each cavity are independent of each other, that is, the cavity connection relationship includes separation, tangency and intersection, and the intersection distance is less than the wall thickness of the cavity to ensure that the air chambers of adjacent cavities are not interconnected. Optionally, each cavity is independently connected, or selectively connected according to the required function or position. Optionally, in the rebound region, the regional cavity density decreases, and the cavity connection relationship is mainly a discrete and tangential connection; while in the support region, the regional cavity density increases, and the cavity connection relationship is mainly an intersecting connection, and it is ensured that the air chambers in adjacent cavities are not connected.

During implementation, the cavity structure data includes cavity shape, cavity size and cavity wall thickness. The cavity shape is the shape of the cell cavity, including the outer shape and the internal air chamber shape, and the cavity shape includes ellipsoid, sphere, cuboid and octahedron, and may also include other polygonal structures. The cavity shape corresponds to the cavity density of the region, so as to provide customized cavity distribution for specific application scenarios and meet the personalized rebound force and support force requirements. The cavity size is the length of the cell cavity in each direction in three-dimensional space. Different cavity sizes are designed based on the cavity shape to provide different mechanical effects corresponding to different rebound regions and support regions, so as to achieve personalized customization. The cavity wall thickness is the side wall thickness of the cell cavity. The corresponding side wall thickness is designed according to the rebound region and the support region to provide corresponding rebound force or support force. For example, when the side wall thickness is smaller, the internal air chamber is larger, and the cell cavity can provide higher rebound force; and when the side wall thickness is greater, the internal air chamber is smaller, and the cell cavity can provide higher support force.

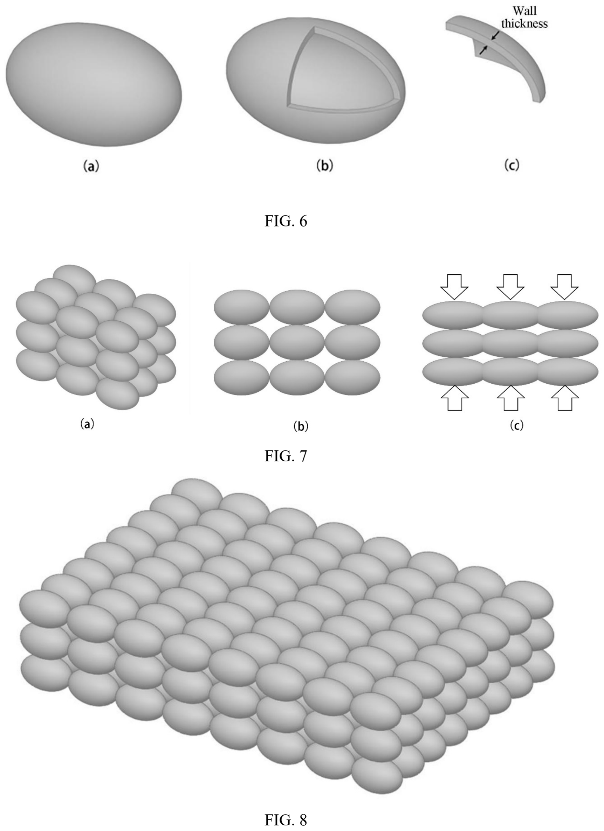

As shown in FIG. 6, a schematic diagram of an ellipsoidal cell cavity is illustrated, while FIG. 6 (a) is an ellipsoidal cell cavity, and FIG. 6 (b) and FIG. 6 (c) are respectively one-eighth of the side wall cut off from the ellipsoidal cell cavity, and the seven-eighths of the ellipsoidal cell cavity with an air chamber left. By repeatedly attaching the ellipsoidal cell cavities, a complex array of a sports equipment cavity structure with internal pressure can be obtained. As shown in FIG. 7, a schematic diagram of a 3 × 3 × 3 regular array under non-stress and stress conditions is illustrated. FIG. 7 (a) is a perspective view under non-stress conditions, FIG. 7 (b) is a front view under non-stress conditions, and FIG. 7 (c) is a front view under vertical force conditions. Since the parameters of the ellipsoidal cell cavity are the same, the regular array provides the same rebound force and support force. As shown in FIG. 8, a regular array constructed with ellipsoidal cell cavities is illustrated, and the structure of each cell cavity is the same, which can provide uniform support and rebound force.

Further, as shown in FIG. 1, the manufacturing method for the sports equipment cavity structure with internal pressure according to the present disclosure further includes the steps of:
S300, determining a cavity structure model according to the cavity distribution data, the cavity structure data and the cavity air pressure data.

During implementation, the cavity distribution data, the cavity structure data and the cavity air pressure data are adopted to determine the required cavity distribution form, the specific structure of a cell cavity and the air pressure inside the cell cavity in the sports equipment cavity structure with internal pressure, thereby determining the cavity structure model to guide the 3D printing process.

Further, as shown in FIG. 1, the manufacturing method for the sports equipment cavity structure with internal pressure according to the present disclosure further comprises the steps of:
S400, importing the cavity structure model into a 3D printer, to print and generate the sports equipment cavity structure with internal pressure.

Conventional 3D printing methods are difficult to ensure that air chambers can be retained in the sports equipment cavity structure with internal pressure. The present disclosure adopts DLP (Digital Light Processing) technology, and prints layer by layer from an initial printing position to obtain the sports equipment cavity structure with internal pressure having air chambers inside through the pull-up light-curing 3D printing technology. Better, a 3D printer in a pressurized environment or a 3D printer with a pressure increasing module inside are adopted to print and generate the sports equipment cavity structure with internal pressure, so as to ensure that the pressurized environment inside the cavity structure is greater than the atmospheric pressure.

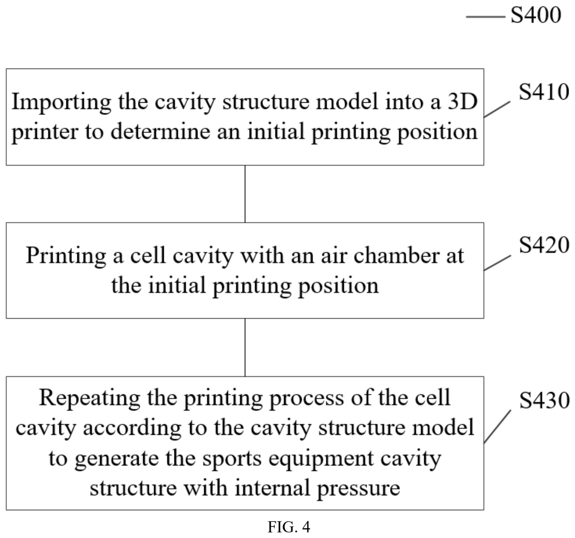

In one embodiment, as shown in FIG. 4, the step S400 includes:
S410, importing the cavity structure model into a 3D printer to determine an initial printing position;
S420, printing a cell cavity with an air chamber at the initial printing position;
S430, repeating the printing process of the cell cavity according to the cavity structure model to generate the sports equipment cavity structure with internal pressure.

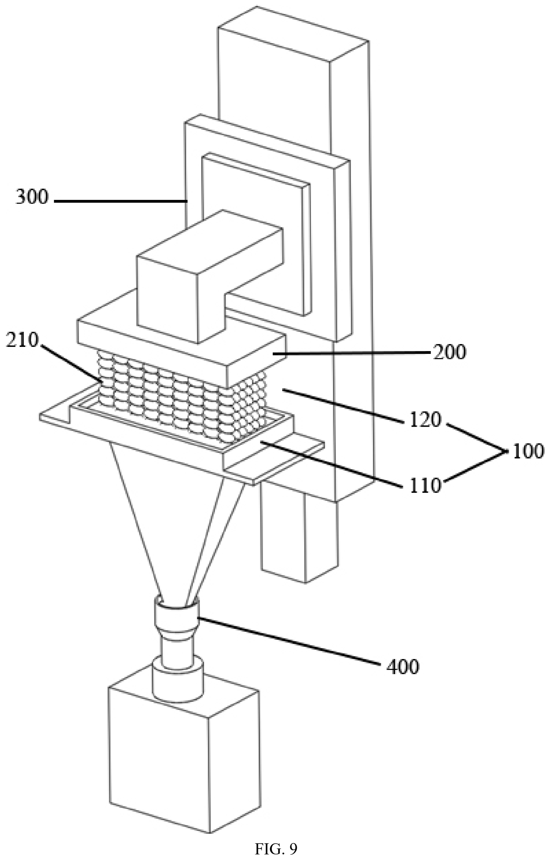

FIG. 9 is a schematic diagram of a 3D printer in an embodiment of the present disclosure, the 3D printer includes a base 100, a printing platform 200, a mobile device 300 and a UV projector 400. The mobile device 300 moves the printing platform 200 relative to the base 100, thereby printing layer by layer to obtain the sports equipment cavity structure with internal pressure. The 3D printer can be placed in a pressurized environment (i.e., an environment having pressure greater than one atmospheric pressure), or a pressure increasing module can be disposed in the 3D printer to ensure that the pressure inside the printed cell cavity is greater than the atmospheric pressure.

Further, a first position 110 and a second position 120 are adjacently arranged in the vertical direction of the base 100, and the printing platform 200 is arranged above the base 100 and located at the first position 110. The printing platform 200 and the UV projector 400 are symmetrically arranged relative to the base 100, that is, the UV projector 400 is located below the base 100, so as to realize the printing process on the printing platform 200 by projecting a slice image of the cavity structure model of the sports equipment cavity structure with internal pressure. When the printing process starts, the printing platform 200 is located at the first position 110, a cell cavity 210 is printed on the printing platform 200, and an air chamber is formed in the cell cavity 210 simultaneously. During the printing process, the mobile device 300 moves the printing platform 200 so that the cell cavity 210 is gradually separated from the resin solution in the first position 110, thereby ensuring that the air chamber is formed in the cell cavity 210. After a layer of the cell cavity 210 is printed, the printing platform 200 and the cell cavity 210 are continued to be driven to move by the mobile device 300, the printed cell cavity 210 is located at the second position 120, and a new layer of cell cavity is continued to be printed below the cell cavity 210, finally forming a sports equipment cavity structure with internal pressure that conforms to the cavity structure model. During the printing process, by placing the 3D printer in a pressurized environment or equipping the 3D printer with a pressure increasing module, the pressure in the air chamber of the cell cavity 210 is ensured to be greater than the atmospheric pressure, thereby providing better support effect and rebound performance. Optionally, the pressure in the cell cavity 210 is greater than 1 atm.

In one embodiment, the cavity model designed by a three-dimensional software is first imported into the 3D printing software, and then the printing process is started. As shown in FIG. 9, the cavity structure corresponding to the cavity model is printed on the printing platform 200 at the first position 110 (the resin tank) of the 3D printer through the pull-up light-curing 3D printing method, and the printing platform 200 is continuously moved upward by the mobile device 300 during the printing process to print layer by layer to form a layer of cell cavity 210. During the printing process, an air chamber is formed in the cell cavity 210, thereby providing better rebound and support performance. Then, the printing platform 200 and the printed cell cavity 210 are continuously raised by the mobile device 300 to continue printing under the printed cell cavity 210 to form a new layer of cell cavity structure. During the pull-up light-curing printing process, high-pressure air is retained inside the air chamber of the cell cavity 210, thereby providing better support effect and rebound performance for the sports equipment cavity structure with internal pressure. After printing layer by layer according to the cavity model, the printed cavity structure is obtained, cleaned and post-cured to get the required sports equipment cavity structure with internal pressure.

In the present embodiment, pressurized air with a pressure more than 1 atm is stored in the cell cavity 210 to ensure the support effect and rebound performance of the sports equipment cavity structure with internal pressure.

In one embodiment, before the cavity structure model is imported into a 3D printer to print and generate the sports equipment cavity structure with internal pressure, a resin material for 3D printing is selected according to the cavity structure model. By adjusting the ratio of different resin materials, the mechanical properties of the side wall of the cell cavity are changed to achieve different stiffness requirements and provide personalized customization services.

In one embodiment, defining a 3D printing material with a modulus of 1 MPa is a pure soft material, and a 3D printing material with a modulus of 1 GPa is a pure hard material. The 3D printing material of the sports equipment cavity structure with internal pressure according to the present disclosure is obtained by mixing the pure soft material and the pure hard material, and the proportion of the pure soft material and the pure hard material in the 3D printing material is adjusted to provide users the materials with different stiffness. The proportion of the pure hard material is increased to increase the stiffness of the 3D printing material, and the proportion of the pure soft material is increased to increase the elasticity of the 3D printing material.

Optionally, the pure soft material and the pure hard material are mixed in a fixed ratio to obtain a 3D printing material with fixed stiffness, and the sports equipment cavity structure with internal pressure is printed therefrom. Optionally, the pure soft material and the pure hard material are mixed in a ratio of 3:7 to provide greater support force and achieve higher stiffness. Optionally, 3D printing materials with different ratios of the pure soft material and the pure hard material are prepared, for example, 3D printing materials with ratios of 1:1, 3:7, 2:3 and 7:3 of the pure soft material and the pure hard material are respectively stored, so that different proportions of 3D printing materials are used respectively when printing the areas requiring different rebound force or support force in the sports equipment cavity structure with internal pressure, so as to achieve the effect of providing different rebound force or support force in different regions without changing the specific physical structure of the cell cavity in the sports equipment cavity structure with internal pressure, expand the range of designing the sports equipment cavity structure with internal pressure, and provide multiple dimensions for the manufacturing method of the sports equipment cavity structure with internal pressure of the present disclosure, so as to better provide personalized customization services.

In one embodiment, the present disclosure further provides a sports equipment cavity structure with internal pressure, which is prepared by the above-described manufacturing method for a sports equipment cavity structure with internal pressure. According to the specific needs of the human body during exercise, the cavity structure with internal pressure is designed with different configurations to provide different rebound and support effects in different regions, thereby assisting human movement and protection, and offering users personalized customization services. In this way, the specific requirements of cushioning materials for different sports equipment can be satisfied, with a broader application scope, free from mold limitations, and favorable for market promotion.

In one embodiment, the present disclosure further provides a use of the sports equipment cavity structure with internal pressure in cushioning materials of sports equipment. The sports equipment cavity structure with internal pressure is prepared by the above-described manufacturing method for a sports equipment cavity structure with internal pressure. According to the requirements of cushioning materials for different sports equipment, the sports equipment cavity structure with internal pressure provides different rebound or support effects in different regions, thereby meeting the specific requirements of cushioning materials for different sports equipment, with a broader application scope, free from mold limitations, and favorable for market promotion.

In summary, the present disclosure discloses a sports equipment cavity structure with internal pressure and a manufacturing method and application thereof, including the steps of: obtaining mechanical data of the sports equipment cavity structure with internal pressure; generating cavity distribution data, cavity structure data and cavity air pressure data according to the mechanical data; determining a cavity structure model according to the cavity distribution data, the cavity structure data and the cavity air pressure data; and importing the cavity structure model into a 3D printer to print and generate the sports equipment cavity structure with internal pressure. The present disclosure derives cavity structures required for different regions based on mechanical data, thereby determining the actual printing model. The model is then printed to obtain a sports equipment cavity structure with internal pressure, which provides respective structural designs and internal cavity pressure values for different functional zones, so as to meet the personalized customization needs of users..

It should be understood that the application of the present disclosure is not limited to the above embodiments. For those skilled in the art, improvements or modifications can be made based on the above description. All these improvements and modifications should fall within the scope of protection of the claims attached to the present disclosure.

## Claims

1. A manufacturing method for a sports equipment cavity structure with internal pressure, comprising steps of:
obtaining mechanical data of the sports equipment cavity structure with internal pressure;
generating cavity distribution data, cavity structure data and cavity air pressure data according to the mechanical data;
determining a cavity structure model according to the cavity distribution data and the cavity structure data; and
importing the cavity structure model into a 3D printer to print and generate the sports equipment cavity structure with internal pressure.

2. The manufacturing method for a sports equipment cavity structure with internal pressure according to claim 1, wherein the step of obtaining mechanical data of the sports equipment cavity structure with internal pressure comprises:
generating a three-dimensional model of the sports equipment cavity structure with internal pressure according to a user body part corresponding to the sports equipment cavity structure with internal pressure;
detecting, by a mechanical sensor, force data of the user body part; and
generating the mechanical data on the three-dimensional model according to the force data.

3. The manufacturing method for a cavity structure of sports equipment with internal pressure according to claim 2, wherein the step of generating cavity distribution data, cavity structure data and cavity air pressure data according to the mechanical data comprises:
obtaining rebound force data and support force data from the mechanical data;
obtaining a support region and an rebound region on the sports equipment cavity structure with internal pressure according to the rebound force data and the support force data;
generating the cavity distribution data according to the support region and the rebound region; and
generating the cavity structure data and the cavity air pressure data according to the rebound force data and the support force data.

4. The manufacturing method for a sports equipment cavity structure with internal pressure according to claim 3, wherein the cavity distribution data comprises:
a cavity connection relationship, the cavity connection relationship illustrates a connection relationship between adjacent cavities;
a regional cavity density, the regional cavity density illustrates a quantity of cavities per unit area in a same horizontal plane; and
a layer count, the layer count illustrate a quantity of cavities in a vertical direction.

5. The manufacturing method for a sports equipment cavity structure with internal pressure according to claim 3, wherein the cavity structure data comprises:
a cavity shape, the cavity shape illustrates a shape of a cell cavity;
a cavity size, the cavity size illustrates a length of the cell cavity in each direction of three-dimensional space; and
a cavity wall thickness, the cavity wall thickness illustrates a side wall thickness of the cell cavity.

6. The manufacturing method for a sports equipment cavity structure with internal pressure according to claim 5, wherein the cavity shape comprises an ellipsoid, a sphere, a cuboid, a cube and an octahedron.

7. The manufacturing method for a sports equipment cavity structure with internal pressure according to claim 3, wherein the cavity air pressure data comprises cavity internal pressure, the cavity internal pressure refers to an air pressure value in the cell cavity, and the cavity internal pressure is greater than 1 atm.

8. The manufacturing method for a sports equipment cavity structure with internal pressure according to claim 1, wherein the step of importing the cavity structure model into a 3D printer to print and generate the sports equipment cavity structure with internal pressure, comprises:
importing the cavity structure model into a 3D printer to determine an initial printing position;
printing a cell cavity with an air chamber at the initial printing position; and
repeating the printing process of the cell cavity according to the cavity structure model to generate the sports equipment cavity structure with internal pressure.

9. The manufacturing method for a sports equipment cavity structure with internal pressure according to claim 7, wherein before the step of importing the cavity structure model into a 3D printer to print and generate the sports equipment cavity structure with internal pressure, the method further comprises:
selecting, according to the cavity structure model, a resin material for 3D printing.

10. A sports equipment cavity structure with internal pressure, wherein the sports equipment cavity structure with internal pressure is prepared by the manufacturing method for a sports equipment cavity structure with internal pressure according to any one of claims 1 to 9.
